# FASCICULE DE BREVET EUROPEEN

(11) **EP 3 472 674 B1**
(45) Date de publication et mention de la délivrance du brevet: **24.04.2024**
(21) Numéro de dépôt: 17730518.2
(22) Date de dépôt: 21.06.2017
(51) Int. Cl.: G04B 17/04, G04B 17/06, G04B 1/14, C01B 32/16, B82Y 15/00, B82Y 40/00

(54) **PIÈCE POUR MOUVEMENT HORLOGER, MOUVEMENT HORLOGER, PIÈCE D'HORLOGERIE ET PROCÉDÉ DE FABRICATION D'UNE TELLE PIÈCE POUR MOUVEMENT HORLOGER**
UHRWERKSKOMPONENTE, UHRWERK, UHR UND VERFAHREN ZUR HERSTELLUNG EINER DERARTIGEN UHRWERKSKOMPONENTE
CLOCKWORK COMPONENT, CLOCKWORK, TIMEPIECE, AND METHOD FOR MANUFACTURING A CLOCKWORK COMPONENT OF SAID TYPE

(30) Priorité: 21.06.2016 FR 1655786
(43) Date de publication de la demande: 24.04.2019
(73) Titulaire: LVMH Swiss Manufactures SA, 2300 La Chaux-de-Fonds (CH)
(72) Inventeur: SEMON, Guy, 90350 Evette-Salbert (FR); LUND, Jason, 2206 Les Geneveys-sur-Coffrane (CH); JENSEN, Brian, Orem, Utah 84057 (US)
(74) Mandataire: Plasseraud IP
(86) Numéro de dépôt international: PCT/EP2017/065276
(87) Numéro de publication internationale: WO 2017/220672

(56) Documents cités:
- EP-A2- 1 256 853
- EP-A2- 1 256 854
- JP-A- H01 120 448
- US-A1- 2010 294 424
- US-A1- 2013 294 999
- HANNA BRANDON H ET AL: "Mechanical Property Measurement of Carbon Infiltrated Carbon Nanotube Structures for Compliant Micromechanisms", JOURNAL OF MICROELECTROMECHANICAL SYSTEMS, IEEE SERVICE CENTER, US, vol. 23, no. 6, 1 décembre 2014 (2014-12-01), pages 1330-1339, XP011565571, ISSN: 1057-7157, DOI: 10.1109/JMEMS.2014.2312847 [extrait le 2014-11-25]
- BO LI ET AL: "Highly Organized Two- and Three-Dimensional Single-Walled Carbon Nanotube-Polymer Hybrid Architectures", ACS NANO, vol. 5, no. 6, 28 juin 2011 (2011-06-28), pages 4826-4834, XP055357310, US ISSN: 1936-0851, DOI: 10.1021/nn2008782
- BIN ZHAO ET AL: "Exploring Advantages of Diverse Carbon Nanotube Forests with Tailored Structures Synthesized by Supergrowth from Engineered Catalysts", ACS NANO, vol. 3, no. 1, 27 janvier 2009 (2009-01-27), pages 108-114, XP055401259, US ISSN: 1936-0851, DOI: 10.1021/nn800648a
- HUTCHISON D N ET AL: "Carbon Nanotubes as a Framework for High-Aspect-Ratio MEMS Fabrication", JOURNAL OF MICROELECTROMECHANICAL SYSTEMS, IEEE SERVICE CENTER, US, vol. 19, no. 1, 1 février 2010 (2010-02-01), pages 75-82, XP011298225, ISSN: 1057-7157
- MING XU ET AL: "Alignment Control of Carbon Nanotube Forest from Random to Nearly Perfectly Aligned by Utilizing the Crowding Effect", ACS NANO, vol. 6, no. 7, 24 juillet 2012 (2012-07-24), pages 5837-5844, XP055357311, US ISSN: 1936-0851, DOI: 10.1021/nn300142j

## Description

### DOMAINE DE L'INVENTION

La présente invention est relative aux pièces pour mouvements horlogers, aux mouvements horlogers et aux pièces d'horlogerie, et aux procédés de fabrication de telles pièces pour mouvements horlogers.

### ARRIERE PLAN DE L'INVENTION

Les mouvements horlogers comprennent classiquement un régulateur, oscillateur mécanique qui détermine la base de temps du mouvement horloger. Ce régulateur comporte un ressort spiral associé à une masse oscillante appelée balancier. Ce ressort spiral requiert une extrême précision dimensionnelle qui détermine la précision temporelle du mouvement horloger.

Un exemple de ressort spiral est donné notamment dans le document JP2008116205A. Ce ressort spiral est réalisé en un matériau composite comprenant une matrice de graphite et de carbone amorphe, renforcée par des nanotubes de carbone qui sont dispersés dans la matrice et alignés dans la direction longitudinale du spiral. Les nanotubes ont un diamètre de l'ordre de 10nm et une longueur d'environ 10 microns. Pour fabriquer le spiral, on réalise d'abord un mélange homogène avec les nanotubes, le graphite et le carbone amorphe, puis on extrude le mélange pour obtenir la forme du ressort spiral dans le but que les nanotubes soient alignés dans la longueur du spiral.

Un tel ressort spiral présente de nombreux inconvénients :
- le procédé d'extrusion ne permet pas une grande précision mécanique, d'où une imprécision temporelle rédhibitoire,
- l'orientation des nanotubes est mal maîtrisée, puisque les nanotubes sont disposés aléatoirement dans le mélange homogène,
- le procédé est complexe à mettre en œuvre pour s'assurer d'une bonne homogénéité du matériau, qui favorise la régularité du ressort spiral,
- il est complexe d'obtenir des propriétés mécaniques souhaitées du ressort spiral car il faut jouer très précisément sur les quantités du mélange tout en conservant son homogénéité.

Ces inconvénients existent aussi, au moins en partie, pour d'autres pièces flexibles pour mouvement horloger.

Par ailleurs, le document Hutchison et al. (Carbon Nanotubes as a Framework for High-Aspect-Ratio MEMS Fabrication, JOURNAL OF MICROELECTROMECHANICAL SYSTEMS, 20100201 IEEE SERVICE CENTER, US - ISSN 1057-7157, Vol:19, Nr:1, Page(s):75 - 82), selon son abrégé, indique qu'une classe de matériaux composites à base de nanotubes de carbone (CNT) a été mise au point pour tirer parti de la forme précise à haut rapport d'aspect des forêts de nanotubes à croissance verticale à motifs. Ces forêts structurées ont été rendues mécaniquement robustes par infiltration de vapeur chimique et libérées par gravure d'une couche sacrificielle sous-jacente. Une variété de dispositifs MEMS fonctionnels a été fabriquée, y compris des porte-à-faux, des mécanismes bistables et des actionneurs thermomécaniques, en utilisant cette technique. Un large éventail de matériaux déposables par voie chimique en phase vapeur pourrait être utilisé comme matériaux de remplissage ; ici, a été spécifiquement explorée l'infiltration par le silicium et le nitrure de silicium. La technique de l'armature de NTC peut permettre la fabrication de MEMS à haut rapport d'aspect à partir d'une variété de matériaux présentant des propriétés souhaitées telles que la stabilité à haute température ou la robustesse. Le module élastique des composites silicium-nanotube et nitrure de silicium-nanotube est dominé par le matériau de remplissage, mais ils restent électriquement conducteurs, même lorsque le matériau de remplissage (plus de 99% de la masse du composite) est isolant.

### OBJETS ET RESUME DE L'INVENTION

La présente invention a notamment pour objet de pallier tout ou partie des inconvénients susmentionnés.

A cet effet, l'invention propose une pièce pour mouvement horloger comprenant au moins une partie flexible, ladite partie flexible étant adaptée pour fléchir dans un plan perpendiculaire à un axe et étant réalisée en un matériau composite comprenant des nanotubes tenus par une matrice, caractérisée en ce que les nanotubes forment une forêt de nanotubes, les nanotubes étant juxtaposés et disposés généralement parallèlement à l'axe, ladite pièce pour mouvement horloger étant choisie parmi :
- un ressort spiral adapté pour osciller autour de l'axe,
- un oscillateur pour mouvement horloger, et
- un ressort de barillet.

Grâce à ces dispositions, on peut réaliser la pièce pour mouvement horloger avec une précision de l'ordre de quelques nanomètres, avec une orientation des nanotubes et une homogénéité totalement maîtrisées et reproductibles obtenues grâce à des procédés de croissance de nanotubes et d'infiltration de la matrice dans la forêt de nanotubes. Dans le cas où la pièce pour mouvement horloger est un ressort spiral, il en résulte une précision temporelle exceptionnelle du ressort spiral.

De plus, il est simple d'obtenir des propriétés mécaniques souhaitées de la pièce pour mouvement horloger, en jouant par exemple sur la matière de la matrice et / ou la quantité de matrice infiltrée dans la forêt de nanotubes.

A la différence du brevet mentionné ci-dessus, les nanotubes sont orientés perpendiculairement au plan de flexion et non dans ce plan. Cela va à l'encontre de l'enseignement du document JP2008116205A qui préconise d'aligner les nanotubes dans la longueur du spiral pour utiliser leurs propriétés mécaniques de flexion, connues de l'homme du métier. Au contraire, dans la pièce pour mouvement horloger de l'invention, les nanotubes ne sont pas utilisés pour leurs propriétés mécaniques et ne participent pas ou quasiment pas aux propriétés mécaniques de la pièce pour mouvement horloger contrairement au document JP2008116205A susmentionné (puisque les flexions de la pièce ne se traduisent pas par des flexions des nanotubes) mais pour leur précision géométrique de croissance, les propriétés mécaniques étant apportées par la matrice infiltrée.

De plus, le matériau composite ainsi obtenu est particulièrement flexible dans le plan perpendiculaire à l'axe (ce qui peut permettre de diminuer la masse du balancier dans le cas d'un ressort spiral) et quasiment pas hors de ce plan (ce qui est spécialement intéressant pour un ressort spiral horloger).

Enfin, les dispositions précitées permettent de simplifier le procédé de fabrication, en faisant croître les nanotubes sur un substrat tel qu'une galette de silicium, communément désignée par le terme anglais « wafer ».

Dans divers modes de réalisation de la pièce pour mouvement horloger selon l'invention, on peut éventuellement avoir recours en outre à l'une et/ou à l'autre des dispositions suivantes :
- les nanotubes sont en carbone ;
- les nanotubes sont multi-feuillets ;
- les nanotubes ont un diamètre compris entre 7 et 30 nm (ou éventuellement entre 2 et 10 nm, avantageusement compris entre 3 et 7 nm, notamment de l'ordre de 5 nm) ;
- les nanotubes ont une longueur comprise entre 200 et 400 microns (ou éventuellement entre 100 et 200 microns, notamment de l'ordre de 150 microns) ;
- la matrice est en carbone.

Par ailleurs, l'invention a également pour objet un mouvement horloger ayant un ressort spiral tel que défini ci-dessus (ou une autre pièce pour mouvement horloger telle que définie ci-dessus), et une pièce d'horlogerie comprenant un tel mouvement horloger.

L'invention a également pour objet un procédé de fabrication d'une pièce pour mouvement horloger telle que définie ci-dessus, comprenant les étapes suivantes :
a) une étape de croissance de forêt de nanotubes, au cours de laquelle on fait croître la forêt de nanotubes ;
b) une étape d'infiltration, au cours de laquelle on infiltre du matériau constitutif de la matrice dans la forêt de nanotubes.

Dans divers modes de réalisation du procédé de fabrication selon l'invention, on peut éventuellement avoir recours en outre à l'une et/ou à l'autre des dispositions suivantes :
- au cours de l'étape a) de croissance de forêt de nanotubes, on fait croître la forêt de nanotubes sur un substrat (avec éventuellement une ou des couches intermédiaires entre le substrat et la couche additionnelle), et l'étape b) d'infiltration est suivie d'une étape c) de séparation au cours de laquelle on sépare le matériau composite du substrat ;
- au cours de l'étape a) de croissance de forêt de nanotubes, on fait croître la forêt de nanotubes sensiblement perpendiculairement au substrat ;
- avant l'étape a), on pulvérise d'abord sur le substrat une couche additionnelle poreuse de nanotubes (avec éventuellement une ou des couches intermédiaires entre le substrat et la couche additionnelle), puis au cours de l'étape a), on faite croître la forêt de nanotubes sous la couche additionnelle poreuse de nanotubes, et au cours de l'étape b), on infiltre du matériau constitutif de la matrice au-travers de la couche additionnelle poreuse de nanotubes ;
- au moins une couche intermédiaire est interposée entre le substrat et la forêt de nanotubes.

### BREVE DESCRIPTION DES DESSINS

D'autres caractéristiques et avantages de l'invention apparaîtront au cours de la description suivante de plusieurs de ses modes de réalisation, donnés à titre d'exemples non limitatifs, en regard des dessins joints.

Sur les dessins :
- la figure 1 est une vue schématique d'une pièce d'horlogerie pouvant comprendre un ressort spiral selon une première forme de réalisation de l'invention,
- la figure 2 est un schéma bloc du mouvement de la pièce d'horlogerie de la figure 1,
- la figure 3 est une photographie d'un ressort spiral utilisable dans la pièce d'horlogerie de la figure 1,
- la figure 4 est une vue en perspective d'une partie du ressort spiral de la figure 3,
- la figure 5 illustre très schématiquement la constitution du matériau du ressort spiral sous forme de forêt de nanotubes, les nanotubes étant volontairement grossis pour plus de clarté et donc pas représentés à l'échelle,
- la figure 6 est une vue schématique d'un ressort de barillet utilisable dans une pièce d'horlogerie telle que celle de la figure 1, selon une deuxième forme de réalisation de l'invention,
- et la figure 7 - représente un oscillateur mécanique également utilisable dans une pièce d'horlogerie telle que celle de la figure 1, selon une troisième forme de réalisation de l'invention.

### DESCRIPTION PLUS DETAILLEE

Sur les différentes figures, les mêmes références désignent des éléments identiques ou similaires.

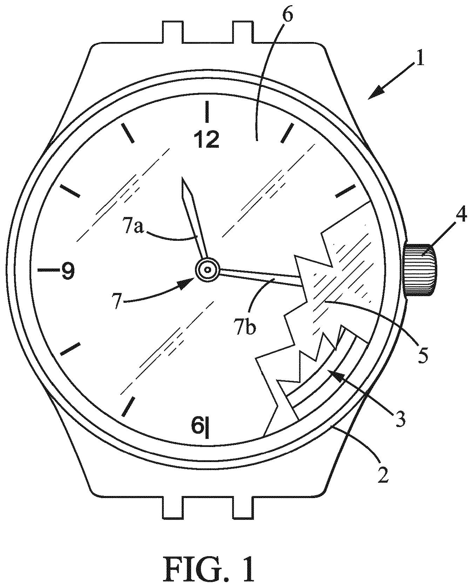

La figure 1 représente une pièce d'horlogerie 1 telle qu'une montre, comprenant :
- un boîtier 2,
- un mouvement horloger 3 contenu dans le boîtier 2,
- généralement, un remontoir 4,
- un cadran 5,
- un verre 6 recouvrant le cadran 5,
- un indicateur de temps 7, comprenant par exemple deux aiguilles 7a, 7b respectivement pour les heures et les minutes, disposé entre le verre 6 et le cadran 5 et actionné par le mouvement horloger 3.

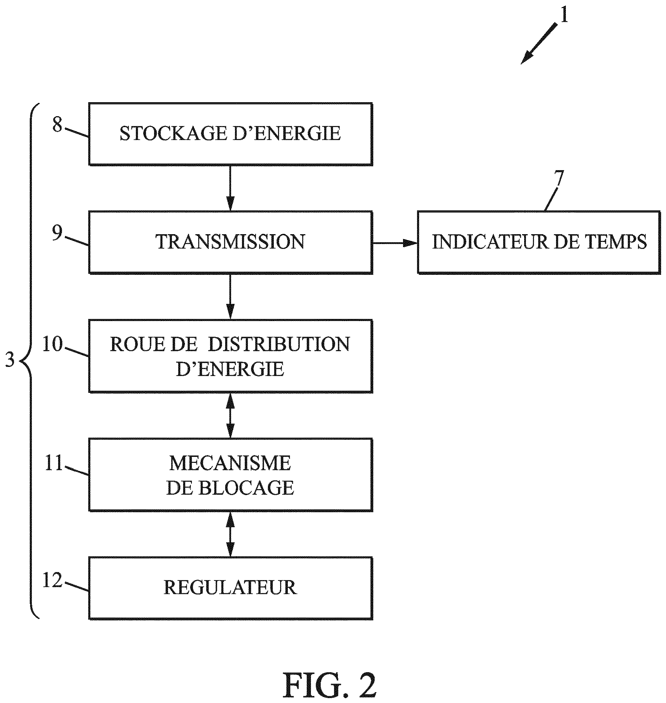

Comme représenté schématiquement sur la figure 2, le mouvement horloger 3 peut comprendre par exemple :
- un dispositif 8 de stockage d'énergie mécanique, généralement un ressort de barillet,
- une transmission mécanique 9 mue par le dispositif 8 de stockage d'énergie mécanique,

- l'indicateur de temps 7 susmentionné,
- une roue 10 de distribution d'énergie (par exemple une roue d'échappement d'un échappement à ancre suisse ou similaire,
- un mécanisme de blocage 11 (par exemple une ancre suisse ou similaire) adapté pour séquentiellement retenir et libérer la roue 10 de distribution d'énergie,
- un régulateur 12, qui est un mécanisme oscillant contrôlant le mécanisme de blocage 11 pour le déplacer régulièrement pour que la roue 10 de distribution d'énergie soit déplacée à intervalles de temps constants.

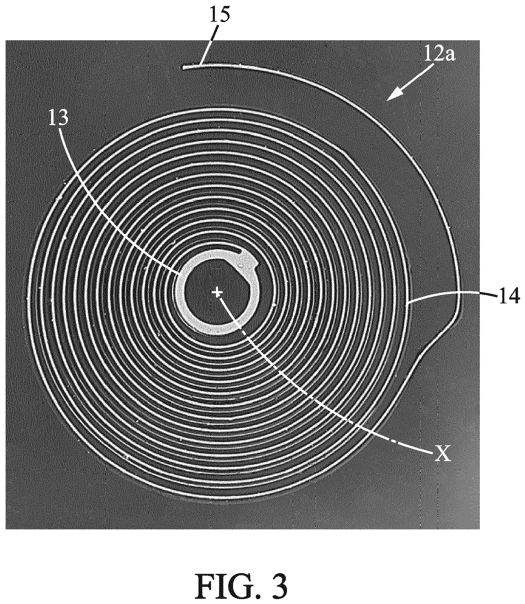

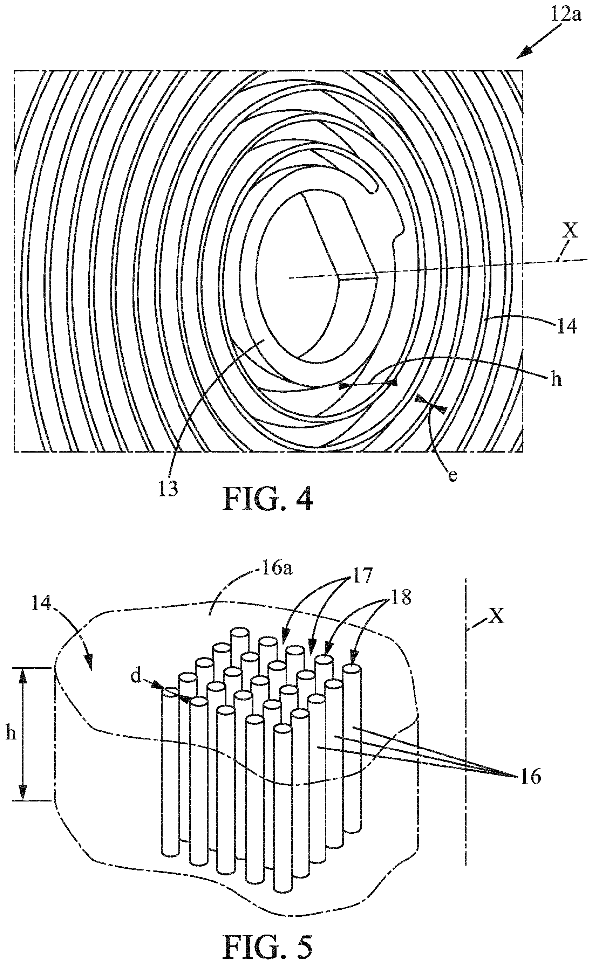

Le régulateur 12 comporte une masse oscillante, par exemple un balancier (non représenté) et un ressort spiral 12a, tel que celui représenté sur les figures 3 et 4.

Le ressort spiral 12a peut comporter :
- une virole centrale 13 destinée à être fixée au centre du balancier, et tournant avec le balancier autour d'un axe central X,
- plusieurs spires 14 s'enroulant autour de l'axe central X, à partir de la virole 13 jusqu'à une portion terminale 15 dite « courbe terminale ».

La portion terminale 15 est fixée, généralement par un piton (non représenté), à un pont (non représenté) sur lequel le balancier est monté pivotant.

Les spires 14 et la portion terminale 15 du ressort spiral 12a peuvent présenter une épaisseur e (dans le plan perpendiculaire à l'axe central X) et une hauteur h (parallèlement à l'axe central X). L'épaisseur e peut être par exemple de l'ordre de quelques dizaines de microns, par exemple d'environ 10 à 100 microns.

Le ressort spiral 12a est réalisé en un matériau composite comprenant des nanotubes 16 (figure 5) tenus par une matrice 16a.

Les nanotubes 16 forment une forêt de nanotubes, ce qui signifie que les nanotubes 16 sont juxtaposés et disposés tous sensiblement parallèlement les uns aux autres.

Avantageusement, les nanotubes 16 sont disposés tous sensiblement parallèlement à l'axe central X, donc généralement parallèlement à l'axe central X. Ils sont généralement espacés régulièrement les uns des autres et présents dans toute la masse du matériau composite, avec une densité surfacique (dans le plan perpendiculaire à l'axe X) qui est contrôlée par le procédé de croissance des nanotubes lors de la fabrication du ressort spiral 12a.

Les nanotubes 16 peuvent avantageusement être en carbone.

Les nanotubes 16 peuvent avantageusement être essentiellement multi-feuillets. Eventuellement, les nanotubes 16 peuvent avantageusement être essentiellement mono-feuillet.

Les nanotubes peuvent avoir un diamètre d compris entre 7 et 30 nm. Eventuellement, les nanotubes peuvent avoir un diamètre d compris entre 2 et 10 nm, avantageusement compris entre 3 et 7 nm, notamment de l'ordre de 5 nm.

Les nanotubes peuvent avoir une longueur comprise entre comprise entre 200 et 400 microns. Eventuellement, les nanotubes peuvent avoir une longueur comprise entre comprise entre 100 et 200 microns, notamment de l'ordre de 150 microns. Cette longueur peut avantageusement correspondre à l'épaisseur h susmentionnée des spires 14 du ressort spiral.

La matrice 16a peut avantageusement être constituée également de carbone. La matrice 16a est représentée très schématiquement sur la figure 5. Elle peut avantageusement englober les nanotubes 16, en étant présente dans les interstices 17 entre nanotubes 16 et dans l'espace intérieur 18 des nanotubes 16. Cette matrice permet d'apporter de la cohésion entre les nanotubes et de modifier ainsi les propriétés mécaniques de la forêt de nanotubes.

Selon l'invention, le ressort spiral 12a est fabriqué par un procédé selon la revendication 9 annexée.

Le ressort spiral 12a peut être fabriqué par un procédé comprenant par exemple les étapes suivantes :
a) une étape de croissance de forêt de nanotubes, au cours de laquelle on fait croître la forêt de nanotubes 16, généralement sur un substrat (non représenté) tel qu'un wafer de silicium ou autre,
b) une étape d'infiltration, au cours de laquelle on infiltre du matériau constitutif de la matrice 16a dans la forêt de nanotubes 16,
c) une étape de séparation au cours de laquelle on sépare le matériau composite du substrat.

Au cours de l'étape a), on peut avantageusement faire croître la forêt de nanotubes 16 sensiblement perpendiculairement au substrat, lequel est disposé perpendiculairement à l'axe central X.

Le substrat est préalablement traité par exemple par photolithographie, de façon connue en soi, pour que la croissance de la forêt de nanotubes ait lieu précisément aux endroits voulus, selon le tracé précis du ressort spiral 12a. Des exemples de procédés de croissance contrôlée de nanotubes et d'infiltration par une matrice de carbone sont donnés par exemple dans le document « Mechanical and electrical properties of carbon-nanotube-templated metallic microstructures » de l'auteur Richard Scott Hansen (Juin 2012), ou dans la Senior Thesis de Collin Brown (22 avril 2014) de l'université Brigham Young University intitulée « infirltration of CNT forests by Atomic Layer Déposition for MEMS applications ».

L'infiltration de la matrice de carbone, connue en soi notamment des documents susmentionnés, a généralement lieu par dépôt en phase vapeur. En agissant sur le temps d'infiltration, on agit sur la quantité de matrice infiltrée entre les nanotubes, ce qui permet très facilement de modifier les propriétés mécaniques du spiral.

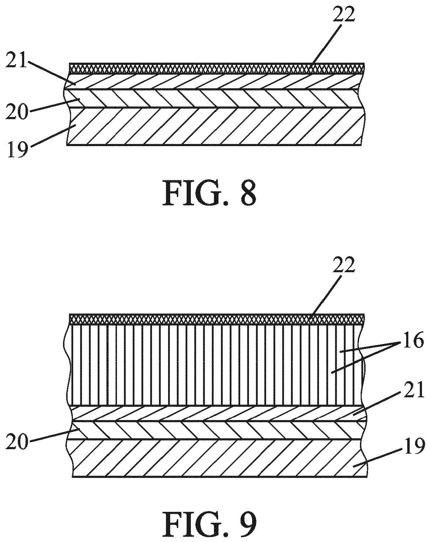

Comme représenté sur les figures 8 et 9, le substrat 19 (de silicium ou autre) peut être recouvert d'une couche de silice 20, elle-même recouverte d'une couche de catalyseur 21 (fer notamment) sur laquelle on fait croître la forêt de nanotubes 16. La couche de silice 20 et la couche de catalyseur 21 restent solidaires de la forêt de nanotubes 16 et sont donc séparées du substrat 2. 19 avec la couche de nanotubes à l'étape c) susmentionnée.

Avant l'étape a) susmentionnée, des nanotubes supplémentaires peuvent éventuellement être dispersés dans un solvant et pulvérisés, notamment par ultrasons, sur la couche de catalyseur 21, pour définir une couche additionnelle 22 de nanotubes. Cette couche additionnelle 22 de nanotubes est suffisamment poreuse pour que le carbone (ou autre matériau) constituant la forêt de nanotubes 16 puisse se déposer au travers de ladite couche additionnelle 22 de nanotubes et croisse au-dessous de ladite couche additionnelle de nanotubes (figure 9). De cette façon, on égalise la croissance des nanotubes 16 de la forêt de nanotubes, qui ont ainsi tous sensiblement la même longueur. L'étape b) d'infiltration est ensuite effectuée également à travers la couche additionnelle 22 de nanotubes, grâce à sa porosité.

Au cours de l'étape c), on peut séparer le matériau composite du substrat 19 par gravure humide ou avantageusement par gravure en phase vapeur, notamment au fluorure d'hydrogène HF.

Le ressort spiral 12a obtenu présente de nombreux avantages :
- on peut réaliser le ressort spiral avec une précision nanométrique, avec une orientation des nanotubes et une homogénéité totalement maîtrisées et reproductibles obtenues par le procédé de croissance de nanotubes et d'infiltration de la matrice dans la forêt de nanotubes, d'où une précision temporelle exceptionnelle du ressort spiral ;
- il est simple d'obtenir des propriétés mécaniques souhaitées du ressort spiral, en jouant par exemple sur la matière de la matrice et / ou la quantité de matrice infiltrée dans la forêt de nanotubes et sur la géométrie du spiral (notamment son épaisseur) ;
- le ressort spiral 12a est particulièrement flexible dans le plan perpendiculaire à l'axe central (ce qui peut permettre de diminuer la masse du balancier) et quasiment pas hors de ce plan (ce qui est spécialement intéressant pour un ressort spiral horloger, notamment pour limiter les effets des accélérations hors plan dues aux chocs ou aux mouvements de l'utilisateur) ;
- le matériau composite est peu sensible aux variations de température (faible coefficient de dilatation thermique, faible variation du module d'élasticité), présente une faible masse volumique, est amagnétique et résiste à la corrosion.

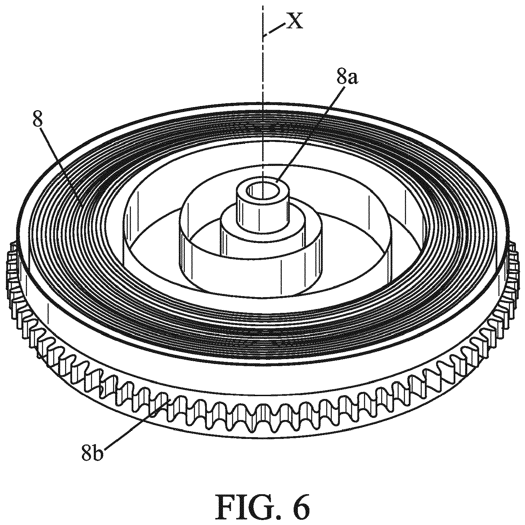

Dans une deuxième forme de réalisation de l'invention, le matériau décrit précédemment est utilisé dans un ressort de barillet 8 tel que celui de la figure 6, utilisable comme dispositif de stockage d'énergie comme expliqué précédemment. Un tel ressort peut par exemple être enroulé autour d'un arbre central 8a selon l'axe X, dans un barillet 8b.

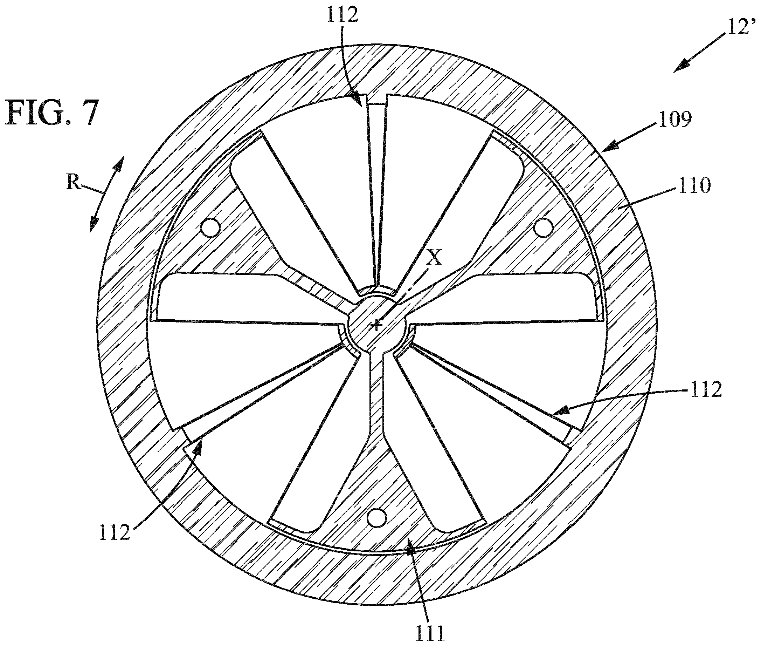

Dans une troisième forme de réalisation de l'invention, le matériau décrit précédemment est

utilisé pour former un oscillateur mécanique autre que le ressort spiral susmentionné. En particulier, le matériau décrit précédemment peut être utilisé pour former un régulateur 12' tel que celui de la figure 7, utilisable à la place du régulateur 12 susmentionné dans la pièce d'horlogerie. Le régulateur 12' peut par exemple être formé d'une seule pièce dans une plaque 110 à l'intérieure de laquelle sont formés un rotor 111 et des suspensions élastiques 112 reliant le rotor 111 au reste de la plaque 110. Les suspensions élastiques peuvent être formées par des branches très fines et élancées formées dans la plaque 110. Le rotor 111 oscille en rotation autour de l'axe X, selon la double flèche R. Un exemple d'un tel régulateur 12' est décrit de façon détaillée dans le document EP3021174A.

## Revendications

1. Pièce (12a, 8, 12') pour mouvement horloger comprenant au moins une partie flexible, ladite partie flexible étant adaptée pour fléchir dans un plan perpendiculaire à un axe (X) et étant réalisée en un matériau composite comprenant des nanotubes (16) tenus par une matrice (16a), les nanotubes (16) formant une forêt de nanotubes, les nanotubes (16) étant juxtaposés et disposés généralement parallèlement audit axe (X), ladite pièce pour mouvement horloger étant choisie parmi :
- un ressort spiral (12a) adapté pour osciller autour dudit axe (X),
- un oscillateur (12') pour mouvement horloger, et
- un ressort de barillet (8).

2. Pièce (12a, 8, 12') pour mouvement horloger selon la revendication 1, dans lequel les nanotubes (16) sont en carbone.

3. Pièce (12a, 8, 12') pour mouvement horloger selon l'une quelconque des revendications précédentes, dans lequel les nanotubes (16) sont multi-feuillets.

4. Pièce (12a, 8, 12') pour mouvement horloger selon l'une quelconque des revendications précédentes, dans lequel les nanotubes ont un diamètre (d) compris entre 7 et 30 nm.

5. Pièce (12a, 8, 12') pour mouvement horloger selon l'une quelconque des revendications précédentes, dans lequel les nanotubes (16) ont une longueur (h) comprise entre 200 et 400 microns.

6. Pièce (12a, 8, 12') pour mouvement horloger selon l'une quelconque des revendications précédentes, dans lequel la matrice (16a) est en carbone.

7. Mouvement horloger ayant une pièce selon l'une quelconque des revendications précédentes.

8. Pièce d'horlogerie comprenant un mouvement horloger (3) selon la revendication 7.

9. Procédé pour fabriquer une pièce (12a, 8, 12') pour mouvement horloger selon l'une quelconque des revendications 1 à 6, comprenant les étapes suivantes :
a) une étape de croissance de forêt de nanotubes (16), au cours de laquelle on fait croître la forêt de nanotubes ;
b) une étape d'infiltration, au cours de laquelle on infiltre du matériau constitutif de la matrice dans la forêt de nanotubes (16).

10. Procédé selon la revendication 9, dans lequel au cours de l'étape a) de croissance de forêt de nanotubes (16), on fait croître la forêt de nanotubes sur un substrat (19), et l'étape b) d'infiltration est suivie d'une étape c) de séparation au cours de laquelle on sépare le matériau composite du substrat (19).

11. Procédé selon la revendication 10, dans lequel au cours de l'étape a) de croissance de forêt de nanotubes (16), on fait croître la forêt de nanotubes (16) sensiblement perpendiculairement au substrat (19).

12. Procédé selon la revendication 10 ou la revendication 11, dans lequel avant l'étape a), on recouvre le substrat (19) d'une couche de silice (20), qui est ensuite elle-même recouverte d'une couche de catalyseur (21), ensuite on pulvérise sur la couche de catalyseur (21) une couche additionnelle (22) poreuse de nanotubes, puis au cours de l'étape a), on fait croître la forêt de nanotubes (16) sous la couche additionnelle (22) poreuse de nanotubes, et au cours de l'étape b), on infiltre du matériau constitutif de la matrice au-travers de la couche additionnelle (22) poreuse de nanotubes.

13. Procédé selon l'une quelconque des revendications 10 à 12, dans lequel au moins une couche intermédiaire (20, 21) est interposée entre le substrat (19) et la forêt de nanotubes (16).

## Patentansprüche

1. Uhrwerkskomponente (12a, 8, 12') aufweisend mindestens einen flexiblen Teil, wobei der flexible Teil angepasst ist, um sich in einer Ebene, die senkrecht zu einer Achse (X) ist, zu biegen, und aus einem Verbundmaterial hergestellt ist, das Nanoröhrchen (16) aufweist, die von einer Matrix (16a) gehalten werden, wobei die Nanoröhrchen (16) einen Nanoröhrchen-Wald bilden, wobei die Nanoröhrchen (16) nebeneinander und allgemein parallel zu der Achse (X) angeordnet sind,
wobei die Uhrwerkskomponente ausgewählt ist aus:
- einer Spiralfeder (12a), die zum Schwingen um die Achse (X) angepasst ist,
- einem Uhrwerk-Oszillator (12') und
- einer Federgehäusefeder (8).

2. Uhrwerkskomponente (12a, 8, 12') nach Anspruch 1, in welcher die Nanoröhrchen (16) aus Kohlenstoff sind.

3. Uhrwerkskomponente (12a, 8, 12') nach einem der vorstehenden Ansprüche, in welcher die Nanoröhrchen (16) mehrfachlaminiert sind.

4. Uhrwerkskomponente (12a, 8, 12') nach einem der vorstehenden Ansprüche, in welcher die Nanoröhrchen (16) einen Durchmesser (d) zwischen 7 und 30 nm haben.

5. Uhrwerkskomponente (12a, 8, 12') nach einem der vorstehenden Ansprüche, in welcher die Nanoröhrchen (16) eine Länge (h) zwischen 200 und 400 Mikrometer haben.

6. Uhrwerkskomponente (12a, 8, 12') nach einem der vorstehenden Ansprüche, in welcher die Matrix (16a) aus Kohlenstoff ist.

7. Uhrwerk mit einer Komponente nach einem der vorstehenden Ansprüche.

8. Uhr aufweisend ein Uhrwerk (3) nach Anspruch 7.

9. Verfahren zur Herstellung einer Uhrwerkskomponente (12a, 8, 12') nach einem der Ansprüche 1 bis 6, aufweisend die folgenden Schritte:
a) einen Nanoröhrchen-(16)-Wald-Wachstumsschritt, im Verlaufe dessen man den Nanoröhrchen-Wald wachsen lässt,
b) einen Einsickerungsschritt, im Verlaufe dessen man das Grundmaterial der Matrix in den Nanoröhrchen-(16)-Wald einsickern lässt.

10. Verfahren nach Anspruch 9, in welchem im Verlaufe des Nanoröhrchen-(16)-Wald-Wachstumsschritts a) man den Nanoröhrchen-Wald auf einem Substrat (19) wachsen lässt, und dem Einsickerungsschritt b) ein Separationsschritt c) folgt, im Verlaufe dessen man das Verbundmaterial von dem Substrat (19) separiert.

11. Verfahren nach Anspruch 10, in welchem im Verlaufe des Nanoröhrchen-(16)-Wald-Wachstumsschritts a) man den Nanoröhrchen-(16)-Wald im Wesentlichen senkrecht zu dem Substrat (19) wachsen lässt.

12. Verfahren nach Anspruch 10 oder Anspruch 11, in welchem vor dem Schritt a) man das Substrat (19) mit einer Siliziumdioxidschicht (20) bedeckt, die daraufhin ihrerseits von einer Katalysatorschicht (21) bedeckt wird, wonach man auf die Katalysatorschicht (21) eine zusätzliche poröse Nanoröhrchen-Schicht (22) aufsprüht, dann im Verlaufe des Schritts a) man den Nanoröhrchen-(16)-Wald unter der zusätzlichen porösen Nanoröhrchen-Schicht (22) wachsen lässt, und im Verlaufe des Schritts b) man das Grundmaterial der Matrix durch die zusätzliche poröse Nanoröhrchen-Schicht (22) hindurch einsickern lässt.

13. Verfahren nach einem der Ansprüche 10 bis 12, in welchem mindestens eine Zwischenschicht (20, 21) zwischen dem Substrat (19) und dem Nanoröhrchen-(16)-Wald angeordnet ist.

## Claims

1. A piece (12a, 8, 12') for a horological movement comprising at least one flexible part, said flexible part being adapted to flex in a plane perpendicular to an axis (X) and being made of a composite material comprising nanotubes (16) held by a matrix (16a), the nanotubes (16) forming a forest of nanotubes, the nanotubes (16) being juxtaposed and disposed generally in parallel to said axis (X),
said piece for a horological movement being selected from:
- a spiral spring (12a) adapted to oscillate about said axis (X),
- an oscillator (12') for a horological movement, and
- a barrel spring (8).

2. The piece (12a, 8, 12') for a horological movement according to claim 1, wherein the nanotubes (16) are made of carbon.

3. The piece (12a, 8, 12') for a horological movement according to any of the preceding claims, wherein the nanotubes (16) are multi-walled.

4. The piece (12a, 8, 12') for a horological movement according to any of the preceding claims, wherein the nanotubes have a diameter (d) of between 7 and 30 nm.

5. The piece (12a, 8, 12') for a horological movement according to any of the preceding claims, wherein the nanotubes (16) have a length (h) of between 200 and 400 microns.

6. The piece (12a, 8, 12') for a horological movement according to any of the preceding claims, wherein the matrix (16a) is made of carbon.

7. A horological movement having a piece according to any of the preceding claims.

8. A timepiece comprising a horological movement (3) according to claim 7.

9. A method for manufacturing a piece (12a, 8, 12') for a horological movement according to any of claims 1 to 6, comprising the following steps:
a) a step of growing a forest of nanotubes (16), during which the forest of nanotubes is grown;
b) an infiltration step, during which matrix-constituent material is infiltrated into the forest of nanotubes (16).

10. The method according to claim 9, wherein during step a) of growing a forest of nanotubes (16), the forest of nanotubes is grown on a substrate (19), and the infiltration step b) is followed by a c) separation step during which the composite material is separated from the substrate (19).

11. The method according to claim 10, wherein during step a) of growing a forest of nanotubes (16), the forest of nanotubes (16) is grown substantially perpendicularly to the substrate (19).

12. The method according to claim 10 or claim 11, wherein prior to step a), the substrate (19) is covered with a layer of silica (20), which is then itself covered with a layer of catalyst (21),
then an additional porous layer (22) of nanotubes is sprayed onto the layer of catalyst (21), and then during step a), the forest of nanotubes (16) is grown under the additional porous layer (22) of nanotubes, and during step b), matrix-constituent material is infiltrated through the additional porous layer (22) of nanotubes.

13. The method according to any of claims 10 to 12, wherein at least one intermediate layer (20, 21) is interposed between the substrate (19) and the forest of nanotubes (16).
